# EUROPEAN PATENT SPECIFICATION

(11) **EP 4 547 898 B1**
(45) Date of publication and mention of the grant of the patent: **30.09.2026**
(21) Application number: 23757508.9
(22) Date of filing: 30.06.2023
(51) Int. Cl.: D01D 5/00, D01D 5/18, D01D 5/38

(54) **METHOD AND SPINNING HEAD FOR CONTINUOUS PRODUCTION OF NANOFIBROUS AND SUBMICRON FIBROUS STRUCTURES AND APPARATUS WITH THIS HEAD**
VERFAHREN UND SPINNKOPF ZUR KONTINUIERLICHEN HERSTELLUNG VON NANOFASER- UND SUBMIKRONFASERSTRUKTUREN UND VORRICHTUNG MIT DIESEM KOPF
PROCÉDÉ ET TÊTE DE FILAGE POUR LA PRODUCTION CONTINUE DE STRUCTURES FIBREUSES SUBMICRONIQUES ET NANOFIBREUSES ET APPAREIL DOTÉ DE CETTE TÊTE

(30) Priority: 01.07.2022 CZ 20220296
(43) Date of publication of application: 07.05.2025
(73) Proprietor: Nanospace Technology S.r.o., 43401 Most (CZ)
(72) Inventor: HREBÍCEK, Tomás, 41201 Litomerice (CZ); RUZICKOVÁ, Jana, 14800 Praha 4 (CZ)
(74) Representative: Zmeskal, Lukas
(86) International application number: PCT/CZ2023/050036
(87) International publication number: WO 2024/002403

(56) References cited:
- WO-A1-2014/025794
- CN-A- 105 369 369
- CN-A- 110 592 689
- CZ-U1- 35 864
- US-B2- 10 351 972

## Description

### Field of the invention

The present invention relates to a spinning apparatus for production of membranes of nanofibrous and submicron fibrous structures, which combines centrifugal and electrostatic spinning with some more optimizing elements.

### Background of the invention

There are several technologies that may produce nanofibers and submicron fibers. The electrostatic spinning is probably the most known and used method. This technology has some disadvantages. Use of purely electrostatic power depends on conductivity of the solutions and melts being spun, which often requires addition of conductive additives, e.g., inorganic salts that may be unsuitable or even toxic in many applications. High voltage may cause a spark, and solvents being evaporated or product being produced may flare up. The consequence of presence of strong electrostatic field around the spinning electrode where the fibers are formed may also include an undesired crystallization of incorporated substances, or oxidation thereof due to presence of ozone being generated in the spinning area due to the electrostatic field.

Other forces may also be used for production of nanofibers and submicron fibers, e.g., centrifugal forces in case of centrifugal spinning (WO2012109240, CN203569248, CZ32624, WO2015003170). In addition, force generated by air pressure in technology called pressure spinning (CN105350183) may be used, where the pressure is brought into the spinning nozzle with spinning solution or melt. Other technologies use underpressure, i.e., so called negative pressure (CN111621858, CN111676530, CN112680801, CN112680800). The last three mentioned technologies are not limited by conductivity of solutions or melts, and they may be easily used for flammable and volatile solutions as well. Besides, they do not cause damage of additives due to presence of the electrostatic field. Disadvantages of these technologies is less fluent deposition of produced fibers on substrate fabric and deposition homogeneity, whereas advantages include increased productivity.

Said methods for production of nanofibers and submicron fibers may be favourably combined. The centrifugal and electrostatic spinning is usually combined, which results in increased productivity of the spinning process and higher homogeneity of the membranes with respect to the centrifugal spinning only. In some cases, the centrifugal force is combined with electrostatic force, however, the centrifugal force is used only for polymer dosing or fiber collection and not for spinning (CN209412367, CN112981561, CN105568405, CN105568404, CN105568403, CN102828260). In other cases, the centrifugal force is used for obtaining of oriented structures due to rotation of a collection electrode or a collecting apparatus (CN203795024, CN110129899, CN103774252, CN103114342, CN105350183). Another option may be the use of an array of collecting rods rotating around a collection electrode instead of a rotating collection body, but in this case the centrifugal force is not used for fiber forming directly but extending and orienting the same (CN110257929, CN110158172). The centrifugal force may be also used for production of nanofibrous yarn where the rotation assists in yarn spinning (CN111286792, CN108796682, CN108796687, CN104726943, CN102212893, CN101688335, ES2790898, JP2009280923, JP2009068121, KR20100070203, KR20080128821). Thereby, one may not talk about a combined centrifugal electrostatic spinning because the centrifugal force is not, in fact, involved in forming of the fibers.

The centrifugal electrostatic spinning may also be combined with an intense pressure air flow that supports forming of fibers (CN105568404, CN105568403, CN105568405, CN105442065, CN103628149, CN103628148, KR20100080478, US2005056956, JP2009228168), but also negative pressure on the collection apparatus (CN110219060, CN104328514, KR100788933), or both (KR100780346). CN105586645 discloses use of all principles mentioned above either separately or in various combinations. Several fibers-generating technologies may be combined in one chamber, and the fibers are jointly deposited on the collector with mixed layer generated (CZ2015117, CZ2018274). Different spinning technologies may also be combined in separate spinning chambers where centrifugal spinning occurs in one chamber and other two chambers use electrostatic spinning (CN110711430), which results in a combination of various layers of different parameters. One may not define both cases mentioned above as a combined centrifugal electrostatic spinning apparatus because only one of the principles is involved in production of the fibers. There is already a wide range of apparatuses for combined centrifugal electrostatic spinning having various inner arrangement. Most frequent arrangement is a rotary spinning head/electrode with rotation axis in vertical direction, and the emerging fibers move to sides, i.e., horizontally, in direction perpendicular to the rotation axis (CN210856421, CN113249873, CN110965137, CN110220468, CN110207600, CN109457394, CN108893791, CN108330550, CN109457394, CN105133054, CN104389037, CN104088024, CN103668488, CN103215664, KR20150129874, KR101558213, KR20100077913, KR20150129874, US10351972). In this way, three-dimensional fibrous cotton-like structures or oriented fibers are produced (CN105442065, CN103774252, CN103114342, CN203795024, CN203583028, US20140051316). This production method is usually discontinuous with manual fiber removal and not suitable for industrial application. An alternative is positioning of the spinning electrode with rotation axis in horizontal direction and the emerging fibers are captured by a substrate fabric located under the spinning head (CN101787573, US2010072674, US2006024399). This may result in high risk of dripping polymer solution and destruction of the product being produced. Another method uses a rotating spinning head/electrode with rotation axis in vertical direction and the emerging fibers move upwards (CN109023557, CN104818537, DE102007027014, KR102162611, KR101979881, KR101712521, KR101617220, US2016145771, KR101426738, KR101426737). This method is favourable because defects caused by dripping may be eliminated as gravity does not permit dripping upwards to the substrate fabric, however, impossibility to use gravity for deposition of the fibers is disadvantageous. The last option is a rotating spinning head/electrode with rotation axis in vertical direction where the emerging fibers direct downwards. The method may be used for production of membranes (CN208328187, CN111926396, CN111893617, KR100788933) as well as oriented structures (CN101857976). Both spinning and collecting apparatus may rotate on two independent shafts (CN112941644). Deposition of the fibrous layers may occur also on several rolls of substrate fabric at the same time, provided that they are located on circumference of round spinning space around the head (CN104178830, CN104178826, CN110656383).

Forming of fibers in the process of centrifugal spinning may also be supported by use of compressed air or pressure spinning (CN113106558, CN112941644, CN105133054), which also applies to the centrifugal electrostatic spinning (CN110344124, CN109023557), or by use of negative pressure that supports deposition of fibers (KR102294550, CN110965137), or combination of both methods (CN105442065). Air flow may occur due to pressure spinning but air may be driven to the spinning chamber also in order to remove excessive air moisture or to remove the evaporated solvent or to guide the emerging fibers (CN107354522, CN105899275, JP2009228168, JP2009097112, JP2009041128, JP20070206071, JP4877140, US2016145771, KR101617220, WO2014169239, WO2013096672). There is also an apparatus which uses magnetic field in addition to the air flow guiding the fiber towards the collector (CN110158170).

A combination of centrifugal electrostatic spinning and electrostatic spraying (CN110219061) is possible as well; in this case the apparatus may not be used at industrial level and works well for laboratory purposes only.

Some spinning apparatuses are intended for spinning of melt and not suitable for spinning of polymer solutions (WO2014025790, CN203474969, CN203238358, CN113584612, CN113564735, CN108707978, CN107354522, CN107245764, CN104088024, CN105899275, KR20100080478, US2005056956, KR20100077913). A special approach is disclosed in CN211471654 and CN108914221, in which the substrate fabrics are arranged circularly around a rotating spinning head and the fibers are deposited on several rolls at the same time. This method is not suitable with respect to homogeneity of the deposit, and no mixed layers may be produced in this case. A mixture of fibers may be produced by a dual spinning system (CN107299400) or mixed layer (JP2009097112, CN104389037, KR102162611, KR102153213).

Another interesting approach uses a combination of centrifugal and electrostatic spinning where the direction in which fibers are removed from the spinning head/electrode is influenced by connecting a part of the spinning head to a high voltage source and a part is connected to earthing (CN109097849). CN103541149 discloses an alternative approach in which the spinning head for electrostatic spinning may be used for centrifugal spinning as well, and offers a possibility for production of mixed layers. It is primarily intended for production of membranes from melting polymers; however, a huge disadvantage is difficult cleaning.

An industrial processing of solutions and melts into nanofibrous and submicron fibrous structures require a sufficient quantity of spinning nozzles in the spinning head as well as easy access to the nozzles, easy replacement, and cleaning thereof in order to reduce downtime and technological shutdown of the apparatuses. Most of the spinning apparatuses do not reflect upon it. All the spinning nozzles be they included in any spinning technology are undergoing successive clogging by polymer solution or melt, and shutdown is required for cleaning thereof. Clogging of the nozzles is critical owing to small dimensions of the nozzles, whereas some solutions may employ a high number of the spinning holes (WO2015008882, WO2015008883). The spinning heads without removable spinning nozzles require a complete cleaning, which is too intricate and time demanding. An interesting alternative of the centrifugal electrostatic spinning from enclosed systems such as nozzles and needles is the use of open spinning systems in which spinning occurs from different edges and surfaces not dimensionally enclosed. Although the polymer solution or melt successively dry on them as well, however, this phenomenon is not so crucial. Various rotating bodies may be used as a spinning head or spinning electrodes (CN113061997, CN103668488, DE102007027014, KR101712521, KR101426738, KR101426737), e.g., rotating disc (CN207435591, CN208309014, CN208279730, CN208219025, CN208219024, CN110760940, CN105970310) or assemblies thereof (CN108914221), a conical plate (CN109735903), a wading cylinder (CN109629015, CN105200538, WO2016038528) or a rotary body with a slot (CN105899275, KR102162611, WO2013096672, CZ2015327). A spinning electrode may be also created by combining several components with grooves (CN109023556). An advantage of open spinning systems is that no clogging and blocking of the nozzles occur, their cleaning is easier, and a disadvantage is impossibility to control fiber diameter through the spinning nozzles used. A fiber diameter then depends on solution or melt parameters and revolution speed of the rotating body from which surface the spinning occurs. The fiber diameter distribution is usually wide and high number of structural defects occur in the process. A disadvantage of the open systems is successive thickening of polymer solutions due to more massive evaporation of solvent, and quality of the product changes as the spinning continues.

Therefore, ideal spinning apparatuses for industrial production of membranes of nanofibers and submicron fibers should be easy to access, easy to dismount, and easy to clean. A favourable embodiment includes a removable system of spinning nozzles that may be replaced during a short break and cleaned to avoid long shutdown in the industrial production owing to cleaning of the whole distribution and spinning apparatus.

According to prior art, there are such solutions, and nozzle assemblies are removed and replaced during a technological break followed by cleaning (US10208404, WO2014025794). Though the dismountable spinning heads are easy to clean, they are not perfectly smooth due to presence of edges, joints, uneven surfaces, and connection screws, which causes ingress of polymer solution followed by dripping of that polymer solution, and quality of the fibrous membrane is deteriorated. This applies to both the spinning heads with removable nozzles as well as the heads consisting of multiple pieces, having a groove on their perimeter due to an assembly design, in particular due to inaccurate production. Presence of the dripping defects not only reduces permeability and increases pressure loss of the membranes, but reduces quality and appearance parameters of the product in general. Contrary to this, replacement of the whole heads is more demanding both with respect to technology and time, and sufficient stock of spinning heads needs to be maintained for continuous replacement, which is demanding financially as well. The spinning heads not permitting replacement of the spinning nozzles are less universal and one defined size of the nozzles must be manufactured only. The replacement system permit use of the same spinning head for different spinning solutions of various parameters. Achieving identical variability without replacement systems is much more expensive. CZ2018136 and CZ35864 disclose a spinning head with a system for replacement but for centrifugal spinning only. Despite the solution eliminates occurrence of dripping defects, this solution is not optimal as well because the spinning head needs to be dismounted to a partial extent.

An interesting option is the use of a plurality of dosing apparatuses with dual or multiple distribution and spinning systems, and production of mixing materials (CN102061530, CN107299400, CN104389037) that either may not be spun together for mutual reaction among them or it represents a preparation of materials made from various solution systems, or a different function is expected from them in a composite layer. Included in the dual and multiple spinning systems are those having a higher number of spinning heads or electrodes. A system of this kind may be e.g., an industrial facility where a plurality of spinning chambers operate, wherein there is one spinning head in each chamber with single dosing system (CN109109422, US2015211149). In this way it is possible to produce two and more different overlaid fibrous layers, however, production of mixed layers, i.e., those comprising two and more different fibers or particles of various polymers, is impossible.

The dual and multiple spinning systems may be used also for production of composite fibers (KR102106268, KR102077722, KR101959839, KR101712521, WO2018199354, WO2018199355, WO2018199353, WO2015139659, WO2015139658). These fibers may have a "core-shell" type structure (CN112962150, CN214529337, CN108385175, CN208717479, CN105369369, CN104928767), "side by side" type structure (CN108728916), or may comprise multiple components (KR20160116236, KR101712521, KR102106268). Furthermore, they may be used for concurrent production of fibrous carrier and spraying of cellular media (CN107456609). It is favourable for many products to combine mechanically stronger and coarser submicron fibers with finer nanofibers having different functional properties, e.g., extraordinary filtering properties. Fibers of various parameters may be made from nozzles of various diameters. A spinning head containing nozzles of two different dimensions is disclosed in JP2009097112, which is not, however, a replacement system.

Cleaning of the dual and multiple spinning systems is extremely difficult due to complexity of their design, in particular in case of production of composite fibers, and their use in the industrial production is significantly limited thereby. The whole spinning head needs to be cleaned at once (CN104389037, JP2009097112, KR102162611, KR102153213).

In absolutely most cases, the centrifugal electrostatic apparatuses use a high voltage DC source. Nonetheless, there are exceptions (JP2009097112).

One of the main problems associated with deposition of emerging nanofibrous and submicron fibrous layers is the presence of electrostatic charge, which may be generated by high voltage source and may also result from friction of substrate fabric while passing through the spinning apparatus. Elimination of excessive charge is disclosed e.g., in CN112981561 where the electrostatic discharge is removed via atomized water applied inside a hollow collecting drum followed by removal using negative pressure. Ionizing process, which may assist in removal of excessive electrostatic charge emerging in the process, is disclosed in JP2009228168. The spinning chamber is earthed and the fibers are charged with ion air during their production. This solution improves deposition of the fibers on the substrate fabric but does not deal with the charge brought to the process by friction of the fabric.

### Summary of the invention

The present invention relates to a structure of a spinning head for continuous production of nanofibrous and/or submicron fibrous structures, a producing apparatus having this head, and a method for production of fibrous structures in this apparatus. The spinning head for continuous production of nanofibrous and/or submicron fibrous structures includes a body. The body is adapted for attachment to a rotary shaft with a drive of a centrifugal electrostatic spinning apparatus. The body is substantially an object of a rotary shape and includes an inner cavity. A primary spinning polymer solution feed terminates in the inner cavity. An outer wall of the inner cavity is provided with at least one through hole for centrifugal transport of spinning polymer solution out of the inner cavity onto outer body surface. The polymer spinning solution may be, e.g., a solution of synthetic water-soluble polymers (polyvinyl alcohol, polyethylene oxide, polyacrylic acid) or polymers soluble in organic solvents (polyvinyl butyral, polyamide, polyurethane, polyethylene terephthalate, polyvinylidene fluoride), biodegradable polymers (polyhydroxy butyrate, polylactic acid, polycaprolactone) or natural polymers (pullulan, zein, gelatine, collagen, cellulose derivatives). They are known from the prior art.

The body is provided on its outer circumference at the location of the at least one through hole with an extension component with at least one radially oriented through channel that follows the through hole on an outer wall of the inner cavity. The extension component is an object that extends out of a spinning head body. At the same time, free end of the extension component is usually the most extreme point of the spinning head from its rotation axis. The free end of the extension component is adopted for removable connection of a replaceable nozzle array. A partitioning plane between the replaceable nozzle array and the spinning head runs outside the spinning head body. The replaceable nozzle array is an object being open from one side and provided with a cavity or a channel. A wall opposite to the open wall is provided with a set of nozzles. The open wall follows the through hole in the extension component, or in the outer wall of the inner cavity. The polymer spinning solution may get up to the nozzles from the inner cavity by action of the centrifugal force when the spinning head rotates.

The removable connection of the replaceable nozzle array is designed so that the extension component is provided with a protrusion at its free end, which protrusion extends to a notch of the replaceable nozzle array connected to the extension component. A groove is made on the protrusion surface of the extension component on top and/or bottom side. A groove is also made on the replaceable nozzle array in the notch location on top and/or bottom side. A mutual position of the grooves is so that the grooves on the top side of the extension component and top side of the connected replaceable nozzle array form a common groove. In addition, the grooves on the bottom side of the extension component and bottom side of the connected replaceable nozzle array may form a bottom common groove. The common grooves may be used jointly on top and bottom side, or separately on bottom or top side. A fixing clamp at least partially engaging into the top and/or bottom common groove is arranged on the protrusion of the extension component and connected replaceable nozzle array. In this way, the replaceable nozzle array is fixed and prevented from being pushed out of the extension component.

In favourable embodiment, the inner cavity is divided by at least one partition into a first space and at least a second space. The primary spinning polymer solution feed terminates in the first space of the inner cavity. The secondary spinning polymer solution feed terminates in the second space. The outer wall of the inner cavity (or of the body) is provided in the place of both first and second space with a corresponding through hole for the centrifugal transport of the spinning polymer solution out of the inner cavity (or of the body) provided with the extension component. This is then referred to as a dual spinning head. Analogically, an embodiment with a third space with tertiary spinning solution feed may be used, which is connected through a corresponding through hole to the extension component, and more.

Said spinning head may be favourably used in the centrifugal electrostatic spinning apparatus. The apparatus includes a primary spinning chamber in which top part there is provided a rotary primary shaft with a drive. The primary spinning head is provided at the free bottom end of the primary shaft. The primary spinning polymer solution feed of the primary spinning head is connected via a first primary distribution system to a device for dosing of the first primary spinning polymer solution. The primary spinning chamber is provided with at least one conditioned air input.

A deposition grid is provided in the bottom part of the primary spinning chamber. Under the deposition grid there is a collector with a primary air outlet for production of negative pressure on the deposition grid. Use of the negative pressure substantially improves production of the fibrous structures. Implementation of the negative pressure has reduced volume of air being draught from the spinning chamber up to sevenfold. With reduced air flow, it is sufficient to climatically adjust noticeably lower volume of air, which results in energy as well as ecological and economic savings. At the same time, flow of lesser volume of treated technological air may be controlled in a better way. An unwinding device of a substrate is provided upstream the entry of the primary spinning chamber. A winding device for transport of the substrate through the apparatus is provided downstream the exit of the primary spinning chamber. To this end, through holes for transfer of the substrate are provided in two opposite walls of the primary spinning chamber. The substrate onto which the emerging nanofibrous and/or submicron fibrous structure are deposited is transported throughout the apparatus on the deposition grid.

Furthermore, the apparatus includes a primary high voltage source connected to the deposition grid. Equally distributed deposition of the fibers on the substrate may be achieved by this. Optionally, a combined source may be used to toggle between alternate current and direct current (AC/DC). In the course of the spinning, they may be changed at random depending on the polymer solutions that provides even higher variability to the apparatus compared to the prior art. Depending on a specific embodiment, a secondary high voltage source may be used as well, favourably also with toggling feature between alternate current and direct current (AC/DC).

The primary spinning head may be in a basic embodiment with the extension component, favourably with the grooves and the fixing clamp. In other case there is an embodiment of the primary spinning head with the first space and at least the second space. In this case, the secondary spinning solution feed of the primary spinning head is connected via the first secondary distribution system to the device for dosing of the first secondary spinning polymer solution.

In another advantageous embodiment, a primary technological chamber may adjoin the primary spinning chamber towards the unwinding device. The primary technological chamber has through holes in two opposite walls for transfer of the substrate. The primary technological chamber includes a primary ionizing device being arranged at a distance over the deposition grid. The ionizing device is used to remove electrostatic charge from the substrate. The electrostatic charge may detrimentally influence quality of the materials being produced. The fibers in the spinning chamber spin around due to centrifugal force, air flow, and electrostatic charge, and randomly entangled tangles of fibers are produced. They deposit on the substrate and have disruptive visual and functional effect on quality of the fibrous membranes. This phenomenon is substantially contributed by the electrostatic charge that may occur in the substrate e.g., due to friction between the substrate and structural components of the spinning apparatus, or due to friction of the fibers in the chamber. This issue is avoided by use of the ionizing device.

In another advantageous embodiment, a primary technological chamber may adjoin the secondary spinning chamber towards the winding device. The secondary technological chamber has through holes in two opposite walls for transfer of the substrate. The secondary technological chamber includes a primary device for infrared heating arranged at a distance over the deposition grid. The infrared heating is capable of invoking the cross-linking reaction of the polymer spinning solution of the emerged fibrous structures, and thus curing thereof.

In addition, the apparatus may be provided with a secondary spinning chamber. With respect to movement of the substrate, it is arranged downstream the primary spinning chamber. In other words, it is arranged between the primary spinning chamber and the winding device. There is a rotary secondary shaft with a drive provided in the top part of the secondary spinning chamber. The secondary spinning head is provided at the free bottom end of the secondary shaft. The primary spinning polymer solution feed of the secondary spinning head is connected via a second primary distribution system to a device for dosing of the second primary spinning polymer solution. The secondary spinning chamber is provided with at least one conditioned air input.

A deposition grid is provided in the bottom part of the secondary spinning chamber. Under the deposition grid there is a collector with a secondary air outlet for production of negative pressure on the deposition grid. In two opposite walls of the secondary spinning chamber there are through holes for transfer of the substrate.

The secondary spinning head may be in a basic embodiment with the extension component, favourably with the grooves and the fixing clamp. In other case there is the embodiment of the secondary spinning head with the first space and at least the second space. In this case the secondary spinning solution feed of the secondary spinning head is connected using the second secondary distribution system to a device for dosing of the second secondary spinning polymer solution.

In another advantageous embodiment, a tertiary technological chamber may adjoin the secondary spinning chamber towards the unwinding device. The tertiary technological chamber has through holes in two opposite walls for transfer of the substrate. The tertiary technological chamber includes a secondary ionizing device being arranged at a distance over the deposition grid.

In other advantageous embodiment, a secondary technological chamber may adjoin the quaternary spinning chamber towards the winding device. The quaternary technological chamber has through holes in two opposite walls for transfer of the substrate. The quaternary technological chamber includes a secondary device for infrared heating arranged at a distance over the deposition grid.

Favourably, the spinning and technological chambers follow directly each other. It means that the wall with the through hole may be common for both mutually adjoining chambers.

The nanofibrous and/or submicron fibrous membranes may be produced in the apparatus comprising a dual spinning head with the first space and the second space in a plurality of innovative ways. In the methods that follow, the selection of the first or second primary and the first or second secondary spinning polymer solution is made based on whether the primary spinning head in the primary spinning chamber or the secondary spinning head in the secondary spinning chamber is involved. The secondary spinning solution feed to the spinning head, the secondary distribution system, and the device for dosing of the secondary spinning polymer solution may be used also for dosing of substances other than spinning polymer solution as well. Said terms should be understood as "eligible for spinning polymer solution". Furthermore, they are eligible for use e.g., in distribution of oils, chemical solvents, and other natural or chemical liquids usable in production of the nanofibrous and/or submicron fibrous structures or particles.

For the first method, the first primary or the second primary spinning polymer solution is centrifugally transported to the spinning chamber from the first space of the inner chamber of the rotating spinning head through the first extension component and the first replaceable nozzle array. From the second space of the inner cavity of the same rotating spinning head, either the first secondary or the second secondary spinning polymer solution is transported through the second extension component and the second replaceable nozzle array to the same spinning chamber.

The essence is that the first primary and the first secondary or the second primary and the second secondary spinning polymer solution are not mutually mixable. The emerging fibers from the secondary spinning polymer solution precipitate by the centrifugal electrostatic spinning in the spinning chamber by evaporation of the solvent of the primary spinning polymer solution. Faster and/or higher quality solidification of the emerging fibers is caused thereby. The parameters may be influenced by climate conditions in the spinning chamber and choosing a type of the solvent (in particular with respect to how fast the solvent is evaporated).

For the other method, the first primary or the second primary spinning polymer solution is centrifugally transported to the spinning chamber from the first space of the inner chamber of the rotating spinning head through the first extension component and the first replaceable nozzle array. The nanofibers and/or submicron fibers are produced by the centrifugal electrostatic spinning. From the second space of the inner cavity of the same rotating spinning head, a cross-linking agent is transported through the second extension component and the second replaceable nozzle array to the spinning chamber. More specifically, this is the centrifugal electrostatic spraying of the cross-linking agent in the form of an aerosol. The cross-linking agent chemically cross-links the emerging fibers from the primary spinning polymer solution. The chemical cross-linking (or cross-linking) is a chemical reaction used to establish so-called secondary covalent chemical bonds between polymer molecules, which results in change to its properties, in particular reduction of solubility. This is desirable in particular for polymers soluble in water. With methods of the prior art, it is a downstream operation. However, the present invention permits running it at the same time with production of the fibers, and then dry the fibers in either secondary or quaternary technological chamber. In addition, the cross-linking reaction is often initiated by heat. At least one technological step of the production is saved.

Generally speaking, if two polymer solutions, of which solution systems influence each other, are processed at the same time in one spinning chamber, it may contribute to forming of the fibers.

For the other method, the first primary or the second primary spinning polymer solution is centrifugally transported to the spinning chamber from the first space of the inner chamber of the rotating spinning head through the first extension component and the first replaceable nozzle array having nozzle diameter X (e.g., 120µm). From the second space of the inner cavity of the same rotating spinning head, either the first secondary or the second secondary spinning polymer solution is transported through the second extension component and the second replaceable nozzle array having nozzle diameter over X (e.g., 200µm) to the spinning chamber. A mixing layer of the nanofibers and/or submicron fibers is generated by the centrifugal electrostatic spinning in the spinning chamber. An average value of fiber diameter from the primary spinning polymer solution is lower than an average value of fiber diameter from the secondary spinning polymer solution. The fibers having higher diameter confer higher strength and improved handling capability to the emerging layer, and the fibers having lower diameter confer better filtration properties.

Furthermore, it is possible to spin two general types of polymer solutions at the same time in one step without intended mutual chemical influence. No two layers each made of one type of polymer but a mixed layer is produced, which includes both fibers created from both polymer solutions in one layer. This method is interesting with respect to the application potential.

Another option is use of the first space of the dual spinning head to form the fibers by centrifugal electrostatic spinning and the second space for concurrent forming of particles or drops by the centrifugal electrostatic spraying. The resulting mixed layer then includes a mix of nanofibers or submicron fibers having particles or drops deposited on their surface. It might be, e.g., an essential oil.

In an embodiment of the apparatus having two spinning chambers, up to four polymer solutions, which are not mutually mixable, may be processed in the production process into various types of composite materials.

In particular, the replaceable nozzle array permits easy and quick replacement for cleaning. In addition, it allows random combination of different sets of spinning nozzles within one spinning head both with respect to their diameter as well as their number in the set. The resulting structure and parameters of the fibrous layer may be significantly influenced thereby. Use of different polymer solutions having different solvent evaporation rate in the dual spinning head may result in faster clogging of the nozzles of single nozzle array. In this case, only one nozzle array may be selectively cleaned. The spinning solution may be substituted during a short technological break in one space of the inner cavity, the following extension component, and the replaceable nozzle array. No known dual or multiple spinning system offers that.

The apparatus described and the method of the continuous production of the nanofibers and/or submicron fibrous structures overcomes the disadvantages of the prior art. In particular, they include insufficient removal of the electrostatic charge and issues associated with forming of the homogenous fibrous layer - forming of drop-like defects and difficult cleaning of the spinning heads having detrimental effect on quality of the membranes in continuous production at large, as well as low variability of the spinning apparatuses that restrict possible forming of mixed and composite materials.

### Explanation of drawings

The exemplary embodiment of the proposed solution is described with reference to the drawings, where:
Fig. 1 - is a cross-section view of the spinning head in A-A line in embodiment with the first space and the second space of the inner cavity;
Fig. 2 - is a ground plan view of the spinning head according to Fig. 1, with indication of removal of the replaceable nozzle array;
Fig. 3 - is an axonometric view of the spinning head according to Fig. 1, with indication of removal of the replaceable nozzle array;
Fig. 4 - is a scheme of the centrifugal electrostatic spinning device having two spinning and four technological chambers.

### Exemplary embodiment of the invention

The exemplary embodiment of a spinning head 20, 21 for continuous production of nanofibrous and/or submicron fibrous structures includes a body 200 comprising a neck 201, a collar 202, and a crown 203. These are centrally located and demountable components forming together an inner cavity 209. However, this design is not necessary for proper operation. A monolithic head 20, 21 with the inner cavity 209 may be assumed, or division thereof into components other than the neck 201, the collar 202, and the crown 203. The neck 201 is adapted for attaching the head 20, 21 to a rotary shaft 34, 35 of a centrifugal electrostatic spinning apparatus.

The inner cavity 209 is divided into a first space and a second space by a partition. A primary spinning polymer solution feed 204 terminates in the first space of the inner cavity 209. A secondary spinning polymer solution feed 205 terminates in the second space of the inner cavity 209. The outer wall of the inner cavity 209 is provided in the place of the first and second space with corresponding through holes for the centrifugal transport of a spinning polymer solution out of the inner cavity 209.

The head 20, 21 is provided with an extension component 206 with radially oriented through channel on its outer circumference (or on outer circumference of its body 200) in the place of each through hole. The channel follows the through hole on the outer wall of the inner cavity 209. A free end of the extension component 206 is adopted for removable connection of a replaceable nozzle array 207. In total, the spinning head is provided with three extension components 206 connected to the first space of the inner cavity 209, and three extension components 206 connected with the second space of the inner cavity 209. The extension components 206 of the first space of the inner cavity 209 are arranged at the first height level, and the extension components 206 of the second space of the inner cavity 209 are arranged at the second height level being different from the first height level. In other words, the extension components 206 of a given space of the inner cavity are arranged in juxtaposition, and the extension components 206 of the other space are provided either above or below them. The extension component 206 is provided with a protrusion at its free end, which protrusion extends to a notch of the replaceable nozzle array 207 connected to the extension component 206. A groove is made on the protrusion surface of the extension component 206 on top and bottom side. A groove is also made on the replaceable nozzle array 207 in the notch position on top and bottom side. The grooves on the top and bottom side of the extension component 206 and the connected replaceable nozzle array 207 form a top and bottom common groove. A fixing clamp 208 engaging in the top and bottom common groove is provided on the replaceable nozzle array 207 and a protrusion of the extension component 206.

The described head 20, 21 is a part of the centrifugal electrostatic spinning apparatus. The apparatus includes a primary spinning chamber 3. A rotary primary shaft 34 with a drive 18 are provided in its upper part. The primary spinning head 20 described above is provided at the free bottom end of the primary shaft 34. The primary spinning polymer solution feed 204 is connected via a first primary distribution system 30 to a device 14 for dosing of the first primary spinning polymer solution. The secondary spinning solution feed 205 of the primary spinning head 20 is connected via a first secondary distribution system 31 to a device 15 for dosing of the first secondary spinning polymer solution. The primary spinning chamber 3 is provided with a conditioned air input 12.

A deposition grid 22 is provided in the bottom part of the primary spinning chamber 3, and a collector 26 with a primary air outlet 36 under the former is provided to produce negative pressure on the deposition grid 22.

An unwinding device 24 of a substrate is provided upstream the entry of the primary spinning chamber 3. A winding device 25 for transport of the substrate 23 through the apparatus is provided downstream the exit of the primary spinning chamber 3. Through holes for transfer of the substrate 23 are provided in two opposite walls of the primary spinning chamber 3. A primary high voltage source 28 is connected to the deposition grid 22 in the primary spinning chamber 3.

A primary technological chamber 2 with the through holes for transfer of the substrate 23 adjoins the primary spinning chamber 3 towards the unwinding device 24. The primary technological chamber 2 includes a primary ionizing device 8 being arranged at a distance over the deposition grid 22.

A secondary technological chamber 4 with the through holes for transfer of the substrate 23 adjoins the primary spinning chamber 3 towards the winding device 25. The secondary technological chamber 4 includes a primary device 9 for infrared heating arranged at a distance over the deposition grid 22.

A tertiary technological chamber 5 with the through holes for transfer of the substrate 23 is provided downstream the secondary technological chamber 4 (i.e., between the secondary technological chamber 4 and the winding device 25). The tertiary technological chamber 5 includes a secondary ionizing device 10 being arranged at a distance over the deposition grid 22.

A secondary spinning chamber 6 is provided downstream the tertiary technological chamber 5 (i.e., between the secondary technological chamber 4 and the winding device 25). A rotary secondary shaft 35 with a drive 19 are provided in its upper part. The secondary spinning head 21 having design identical to the primary spinning head 20 in the primary spinning chamber 3 is provided at the free bottom end of the secondary shaft 35. The primary spinning polymer solution feed 204 of the secondary head 21 is connected via a second primary distribution system 32 to a device 16 for dosing of the second primary spinning polymer solution. The secondary spinning solution feed 205 of the secondary spinning head 21 is connected using the second secondary distribution system 13 to a device 17 for dosing of the second secondary spinning polymer solution. The secondary spinning chamber 6 is provided with a conditioned air input 13.

The deposition grid 22 is provided in the bottom part of the secondary spinning chamber 6, and a collector 27 with a secondary air outlet 37 under the former to produce negative pressure on the deposition grid 22. In two opposite walls of the secondary spinning chamber 6 there are through holes for transfer of the substrate 23. A secondary high voltage source 29 is connected to the deposition grid 22 in the secondary spinning chamber 2.

A quaternary technological chamber 7 with the through holes for transfer of the substrate 23 adjoins the secondary spinning chamber 6 towards the winding device 25. The quaternary technological chamber 7 includes a secondary device 11 for infrared heating arranged at a distance over the deposition grid 22.

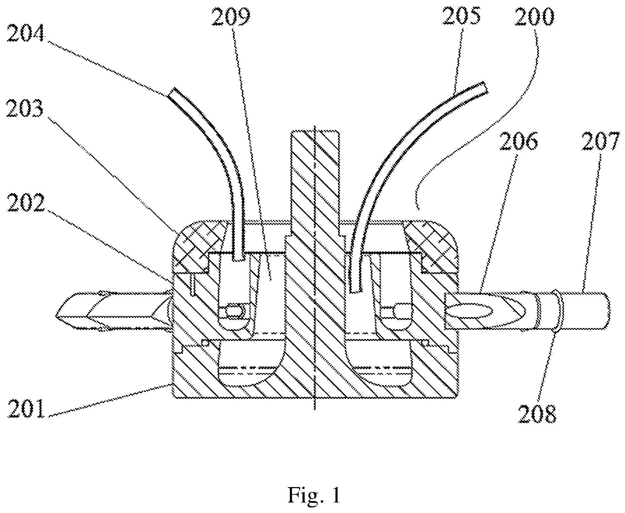

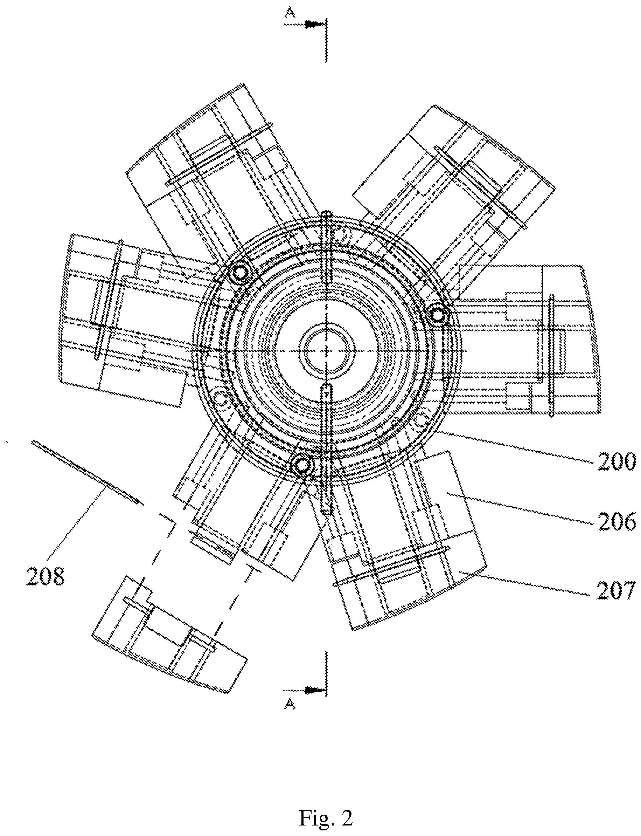

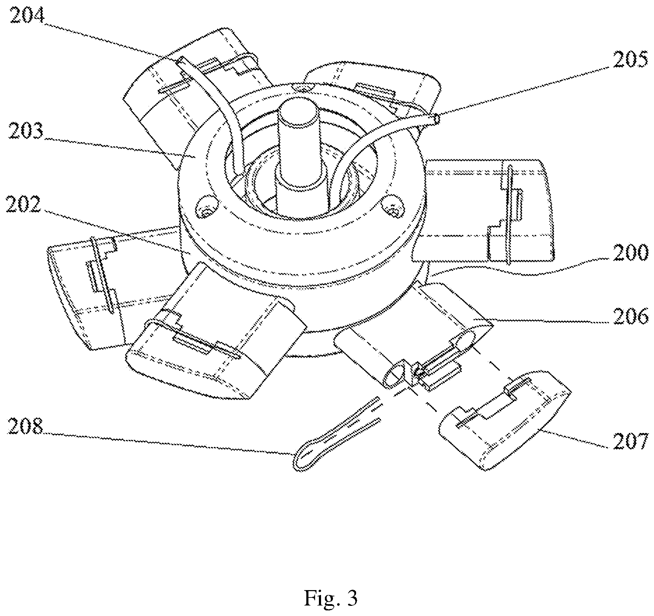

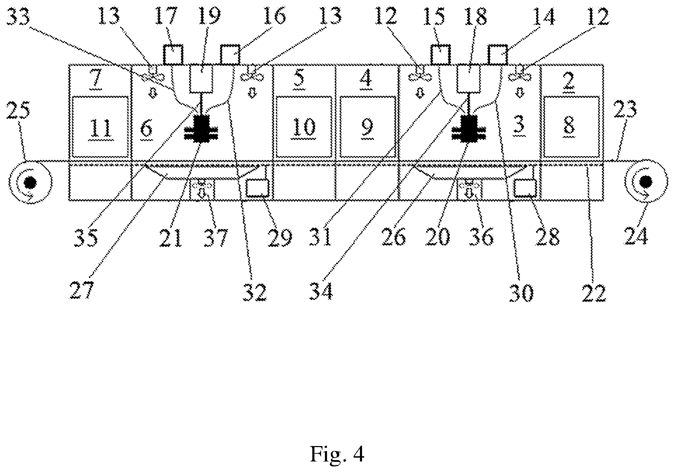

The exemplary embodiment is shown in Fig. 1 to Fig. 4.

### List of reference numerals

2 - primary technological chamber
3 - primary spinning chamber
4 - secondary technological chamber
5 - tertiary technological chamber
6 - secondary spinning chamber
7 - quaternary technological chamber
8 - primary ionizing device
9 - primary device for infrared heating
10 - secondary ionizing device
11 - secondary device for infrared heating
12 - conditioned air input in the primary spinning chamber
13 - conditioned air input in the secondary spinning chamber
14 - device for dosing of the first primary spinning polymer solution
15 - device for dosing of the first secondary spinning polymer solution
16 - device for dosing of the second primary spinning polymer solution
17 - device for dosing of the second secondary spinning polymer solution
18 - primary shaft drive
19 - secondary shaft drive
20 - primary spinning head
21 - secondary spinning head
22 - deposition grid
23 - substrate
24 - unwinding device
25 - winding device
26 - collector in the primary spinning head
27 - collector in the secondary spinning head
28 - primary high voltage source
29 - secondary high voltage source
30 - first primary distribution system for dosing of the first primary polymer
31 - first secondary distribution system for dosing of the first secondary polymer
32 - second primary distribution system for dosing of second primary polymer
33 - second secondary distribution system for dosing of second secondary polymer
34 - primary shaft
35 - secondary shaft
36 - primary air outlet
37 - secondary air outlet
200 - spinning head body
201 - spinning head neck
202 - spinning head collar
203 - spinning head crown
204 - primary spinning polymer solution feed
205 - secondary spinning polymer solution feed
206 - extension component
207 - replaceable nozzle array
208 - fixing clamp
209 - inner cavity

## Claims

1. A spinning head for continuous production of the nanofibrous and/or submicron fibrous structures comprising a body (200) provided with an inner cavity (209) where a primary spinning polymer solution feed (204) terminates,
wherein an outer wall of the inner cavity (209) is provided with at least one through hole for centrifugal transport of spinning polymer solution out of the inner cavity (209) onto outer body (200) surface,
wherein the body (200) is provided on its outer circumference at the location of the at least one through hole with an extension component (206) with at least one radially oriented through channel that follows the through hole on an outer wall of the inner cavity (209), wherein the extension component (209) is an object that extends outside the spinning head body (200) and the free end of the extension component (206) is adapted for removable connection of a replaceable nozzle array (207) **characterized in that**
the extension component (206) is provided with a protrusion at its free end, which protrusion extends to a notch of the replaceable nozzle array (207) connected to the extension component (206),
wherein protrusion surface of the extension component (206) is provided with a groove on top and/or bottom side, and the replaceable nozzle array (207) surface is in the place of a notch on top and/or bottom side also provided with a groove so that the grooves on the top side of the extension component (206) and the connected replaceable nozzle array (207) and/or on the bottom side of the extension component (206) and the connected replaceable nozzle array (207) form top and/or bottom common groove,
wherein a fixing clamp (208) at least partially engaging into the top and/or bottom common groove is arranged on the replaceable nozzle array (207) and the protrusion of the extension component (206).

2. The spinning head according to claim 1 **characterized in that** the inner cavity (209) is divided into a first space and at least second space by at least one partition, wherein the primary spinning polymer solution feed (204) terminates in the first space of the inner cavity (209) and the secondary spinning polymer solution feed (205) terminates in the second space, wherein the outer wall of the inner cavity (209) is provided in the place of both first and second space with a corresponding through hole for the centrifugal transport of the spinning polymer solution out of the inner cavity (209) to outer surface of the body (200) provided with the extension component (206).

3. A centrifugal electrostatic spinning apparatus comprising a primary spinning chamber (3) in which top part there is provided a rotary primary shaft (34) with a drive (18), at which free bottom end a primary spinning head (20) is provided, of which primary spinning polymer solution feed (204) is connected via a first primary distribution system (30) to a device (14) for dosing of the first primary spinning polymer solution, wherein the primary spinning chamber (3) is provided with at least one conditioned air input (12),
and a deposition grid (22) is provided in the bottom part of the primary spinning chamber (3), and a collector (26) with a primary air outlet (36) under the former to produce negative pressure on the deposition grid (22) is provided,
an unwinding device (24) is arranged upstream the input of the primary spinning chamber (3) and a winding device (25) is arranged downstream the primary spinning chamber (3) to transfer a substrate (23) through the apparatus so that the through holes for transfer of the substrate (23) are arranged on two opposite walls of the primary spinning chamber (3),
wherein the apparatus further comprises a primary high voltage source (28) connected to the deposition grid (22) for even deposition of the fibers on the substrate (23) **characterized in that** the primary spinning head (20) is according any of claims 1 to 2.

4. The centrifugal electrostatic spinning apparatus according to claim 3 **characterized in that** the primary spinning head (20) in the primary spinning chamber (3) is according to claim 2, wherein the secondary spinning polymer solution feed (205) of the primary spinning head (20) is connected via a first secondary distribution system (31) to a device (15) for dosing of the first secondary spinning polymer solution.

5. The centrifugal electrostatic spinning apparatus according to claim 3 or 4 **characterized in that** a primary technological chamber (2) with the through holes for transfer of the substrate (23) adjoins the primary spinning chamber (3) towards the unwinding device (24), comprising a primary ionizing device (8) arranged at a distance over the deposition grid (22).

6. The centrifugal electrostatic spinning apparatus according to any of claims 3 to 5 **characterized in that** a secondary technological chamber (4) with the through holes for transfer of the substrate (23) adjoins the primary spinning chamber (3) towards the winding device (25), comprising a primary device (9) for infrared heating arranged at a distance over the deposition grid (22).

7. The centrifugal electrostatic spinning apparatus according to any of claims 3 to 6 **characterized in that** a secondary spinning chamber (6) is provided between the primary spinning chamber (3) and the winding device (25), in which top part a rotary secondary shaft (35) with a drive (19) is provided, at the free end thereof there is provided a secondary spinning head (21) according to any of claims 1 to 2, of which primary spinning polymer solution feed (204) is connected via a second primary distribution system (32) to a device (16) for dosing of the second primary spinning polymer solution, wherein the secondary spinning chamber (6) is provided with at least one conditioned air input (13),
and the deposition grid (22) is provided in the bottom part of the secondary spinning chamber (6), and a collector (27) with a secondary air outlet (37) under the former to produce negative pressure on the deposition grid (22),
wherein in two opposite walls of the secondary spinning chamber (6) there are through holes for transfer of the substrate (23).

8. The centrifugal electrostatic spinning apparatus according to claim 7 **characterized in that** the secondary spinning head (21) in the secondary spinning chamber (6) is according to claim 2, wherein the secondary spinning solution feed (205) of the secondary spinning head (21) is connected via the second secondary distribution system (33) to a device (17) for dosing of the second secondary spinning polymer solution.

9. The centrifugal electrostatic spinning apparatus according to claim 7 or 8 **characterized in that** a tertiary technological chamber (5) with the through holes for transfer of the substrate (23) adjoins the secondary spinning chamber (6) towards the unwinding device (24), comprising a secondary ionizing device (10) arranged at a distance over the deposition grid (22).

10. The centrifugal electrostatic spinning apparatus according to any of claims 7 to 9 **characterized in that** a quaternary technological chamber (7) with the through holes for transfer of the substrate (23) adjoins the secondary spinning chamber (6) towards the winding device (25), comprising a secondary device (11) for infrared heating arranged at a distance over the deposition grid (22).

11. A method of continuous production of nanofibrous and/or submicron fibrous structures in the apparatus according to any of claims 4 to 10 **characterized in that** the first primary or the second primary spinning polymer solution is centrifugally transported to the spinning chamber (3), (6) from the first space of the inner chamber (209) of the rotating spinning head (20), (21) through the first extension component (206) and the first replaceable nozzle array (207),
and from the second space of the inner cavity (209) of the same rotating spinning head (20), (21), either the first secondary or the second secondary spinning polymer solution is centrifugally transported through the second extension component (206) and the second replaceable nozzle array (207) to the spinning chamber (3), (6),
wherein the primary and secondary spinning polymer solution are not mutually mixable and emerging fibers from the secondary spinning polymer solution precipitate in the spinning chamber (3), (6) by evaporation of the solvent of the primary spinning polymer solution.

12. A method of continuous production of nanofibrous and/or submicron fibrous structures in the apparatus according to any of claims 4 to 10 **characterized in that** the first primary or the second primary spinning polymer solution is centrifugally transported to the spinning chamber (3), (6) from the first space of the inner chamber (209) of the rotating spinning head (20), (21) through the first extension component (206) and the first replaceable nozzle array (207), where the nanofibrous and/or submicron fibers are produced by the centrifugal electrostatic spinning,
and from the second space of the inner cavity (209) of the same rotating spinning head (20), (21), a cross-linking agent is centrifugally transported through the second extension component (206) and the second replaceable nozzle array (207) to the spinning chamber (3), (6) for chemical cross-linking of the emerging fibers from the primary spinning polymer solution.

13. A method of continuous production of nanofibrous and/or submicron fibrous structures in the apparatus according to any of claims 4 to 10 **characterized in that** the first primary or the second primary spinning polymer solution is centrifugally transported to the spinning chamber (3), (6) from the first space of the inner chamber (209) of the rotating spinning head (20), (21) through the first extension component (206) and the first replaceable nozzle array (207) having nozzle diameter X,
and from the second space of the inner cavity (209) of the same rotating spinning head (20), (21), either the first secondary or the second secondary spinning polymer solution is centrifugally transported through the second extension component (206) and the second replaceable nozzle array (207) having nozzle diameter more than X to the spinning chamber (3), (6),
and a mixed layer of the nanofibers and/or submicron fibers is produced in the spinning chamber (3), (6), where an average value of fiber diameter from the primary spinning polymer solution is lower than an average value of fiber diameter from the secondary spinning polymer solution.

## Patentansprüche

1. Ein Spinnkopf zur kontinuierlichen Herstellung von nanofaserigen und/oder submikronen Faserstrukturen, umfassend einen Körper (200), der mit einem Innenhohlraum (209) versehen ist, in dem eine primäre Zuführung (204) für eine Spinnpolymerlösung endet,
wobei eine Außenwand des Innenhohlraums (209) mit mindestens einer Durchgangsöffnung für den zentrifugalen Transport der Spinnpolymerlösung aus dem Innenhohlraum (209) auf die Außenfläche des Körpers (200) versehen ist,
wobei der Körper (200) an seinem Außenumfang an der Stelle der mindestens einen Durchgangsöffnung mit einer Verlängerungskomponente (206) mit mindestens einem radial ausgerichteten Durchgangskanal versehen ist, der an die Durchgangsöffnung an einer Außenwand des Innenhohlraums (209) anschließt, wobei die Verlängerungskomponente (209) ein Gegenstand ist, der sich außerhalb des Körpers (200) des Spinnkopfs erstreckt, und das freie Ende der Verlängerungskomponente (206) zur lösbaren Verbindung mit einer austauschbaren Düsenanordnung (207) ausgebildet ist, **dadurch gekennzeichnet, dass**
die Verlängerungskomponente (206) an ihrem freien Ende mit einem Vorsprung versehen ist, welcher Vorsprung sich in eine Aussparung der austauschbaren Düsenanordnung (207) erstreckt, die mit der Verlängerungskomponente (206) verbunden ist,
wobei die Oberfläche des Vorsprungs der Verlängerungskomponente (206) an der Ober- und/oder Unterseite mit einer Nut versehen ist und die Oberfläche der austauschbaren Düsenanordnung (207) im Bereich einer Aussparung an der Ober-und/oder Unterseite ebenfalls mit einer Nut versehen ist, sodass die Nuten an der Oberseite der Verlängerungskomponente (206) und der verbundenen austauschbaren Düsenanordnung (207) und/oder an der Unterseite der Verlängerungskomponente (206) und der verbundenen austauschbaren Düsenanordnung (207) eine gemeinsame obere und/oder untere Nut bilden,
wobei eine Befestigungsklammer (208), die zumindest teilweise in die gemeinsame obere und/oder untere Nut eingreift, an der austauschbaren Düsenanordnung (207) und dem Vorsprung der Verlängerungskomponente (206) angeordnet ist.

2. Spinnkopf nach Anspruch 1, **dadurch gekennzeichnet, dass** der Innenhohlraum (209) durch mindestens eine Trennwand in einen ersten Raum und mindestens einen zweiten Raum unterteilt ist, wobei die primäre Zuführung (204) für die Spinnpolymerlösung im ersten Raum des Innenhohlraums (209) endet und die sekundäre Zuführung (205) für die Spinnpolymerlösung im zweiten Raum endet, wobei die Außenwand des Innenhohlraums (209) im Bereich sowohl des ersten als auch des zweiten Raums mit einer entsprechenden Durchgangsöffnung für den zentrifugalen Transport der Spinnpolymerlösung aus dem Innenhohlraum (209) zur Außenfläche des Körpers (200), der mit der Verlängerungskomponente (206) versehen ist, versehen ist.

3. Eine Vorrichtung zum zentrifugalen elektrostatischen Spinnen, umfassend eine primäre Spinnkammer (3), in deren oberem Teil eine drehbare primäre Welle (34) mit einem Antrieb (18) vorgesehen ist, an deren freiem unteren Ende ein primärer Spinnkopf (20) vorgesehen ist, dessen primäre Zuführung (204) für die Spinnpolymerlösung über ein erstes primäres Verteilungssystem (30) mit einer Vorrichtung (14) zum Dosieren der ersten primären Spinnpolymerlösung verbunden ist, wobei die primäre Spinnkammer (3) mit mindestens einem Einlass (12) für konditionierte Luft versehen ist,
und ein Abscheidegitter (22) ist im unteren Teil der primären Spinnkammer (3) vorgesehen, und darunter ist ein Kollektor (26) mit einem primären Luftauslass (36) vorgesehen, um einen Unterdruck am Abscheidegitter (22) zu erzeugen,
eine Abwickelvorrichtung (24) stromaufwärts des Eingangs der primären Spinnkammer (3) angeordnet ist und eine Aufwickelvorrichtung (25) stromabwärts der primären Spinnkammer (3) angeordnet ist, um ein Substrat (23) durch die Vorrichtung zu transportieren, sodass Durchgangsöffnungen für den Transport des Substrats (23) an zwei gegenüberliegenden Wänden der primären Spinnkammer (3) angeordnet sind, wobei die Vorrichtung ferner eine primäre Hochspannungsquelle (28) umfasst, die mit dem Abscheidegitter (22) zur gleichmäßigen Ablagerung der Fasern auf dem Substrat (23) verbunden ist, **dadurch gekennzeichnet, dass** der primäre Spinnkopf (20) einem der Ansprüche 1 bis 2 entspricht.

4. Vorrichtung zum zentrifugalen elektrostatischen Spinnen nach Anspruch 3, **dadurch gekennzeichnet, dass** der primäre Spinnkopf (20) in der primären Spinnkammer (3) Anspruch 2 entspricht, wobei die sekundäre Zuführung (205) für die Spinnpolymerlösung des primären Spinnkopfs (20) über ein erstes sekundäres Verteilungssystem (31) mit einer Vorrichtung (15) zum Dosieren der ersten sekundären Spinnpolymerlösung verbunden ist.

5. Vorrichtung zum zentrifugalen elektrostatischen Spinnen nach Anspruch 3 oder 4, **dadurch gekennzeichnet, dass** eine primäre technologische Kammer (2) mit Durchgangsöffnungen für den Transport des Substrats (23) an die primäre Spinnkammer (3) in Richtung der Abwickelvorrichtung (24) angrenzt, umfassend eine primäre Ionisierungsvorrichtung (8), die in einem Abstand über dem Abscheidegitter (22) angeordnet ist.

6. Vorrichtung zum zentrifugalen elektrostatischen Spinnen nach einem der Ansprüche 3 bis 5, **dadurch gekennzeichnet, dass** eine sekundäre technologische Kammer (4) mit Durchgangsöffnungen für den Transport des Substrats (23) an die primäre Spinnkammer (3) in Richtung der Aufwickelvorrichtung (25) angrenzt, umfassend eine primäre Vorrichtung (9) zur Infrarotheizung, die in einem Abstand über dem Abscheidegitter (22) angeordnet ist.

7. Vorrichtung zum zentrifugalen elektrostatischen Spinnen nach einem der Ansprüche 3 bis 6, **dadurch gekennzeichnet, dass** eine sekundäre Spinnkammer (6) zwischen der primären Spinnkammer (3) und der Aufwickelvorrichtung (25) vorgesehen ist, in deren oberem Teil eine drehbare sekundäre Welle (35) mit einem Antrieb (19) vorgesehen ist, an deren freiem Ende ein sekundärer Spinnkopf (21) nach einem der Ansprüche 1 bis 2 vorgesehen ist, dessen primäre Zuführung (204) für die Spinnpolymerlösung über ein zweites primäres Verteilungssystem (32) mit einer Vorrichtung (16) zum Dosieren der zweiten primären Spinnpolymerlösung verbunden ist, wobei die sekundäre Spinnkammer (6) mit mindestens einem Einlass (13) für konditionierte Luft versehen ist,
und das Abscheidegitter (22) ist im unteren Teil der sekundären Spinnkammer (6) vorgesehen, und darunter ist ein Kollektor (27) mit einem sekundären Luftauslass (37) vorgesehen, um einen Unterdruck am Abscheidegitter (22) zu erzeugen,
wobei in zwei gegenüberliegenden Wänden der sekundären Spinnkammer (6) Durchgangsöffnungen für den Transport des Substrats (23) vorhanden sind.

8. Vorrichtung zum zentrifugalen elektrostatischen Spinnen nach Anspruch 7, **dadurch gekennzeichnet, dass** der sekundäre Spinnkopf (21) in der sekundären Spinnkammer (6) Anspruch 2 entspricht, wobei die sekundäre Zuführung (205) der Spinnlösung des sekundären Spinnkopfs (21) über das zweite sekundäre Verteilungssystem (33) mit einer Vorrichtung (17) zum Dosieren der zweiten sekundären Spinnpolymerlösung verbunden ist.

9. Vorrichtung zum zentrifugalen elektrostatischen Spinnen nach Anspruch 7 oder 8, **dadurch gekennzeichnet, dass** eine tertiäre technologische Kammer (5) mit Durchgangsöffnungen für den Transport des Substrats (23) an die sekundäre Spinnkammer (6) in Richtung der Abwickelvorrichtung (24) angrenzt, umfassend eine sekundäre Ionisierungsvorrichtung (10), die in einem Abstand über dem Abscheidegitter (22) angeordnet ist.

10. Vorrichtung zum zentrifugalen elektrostatischen Spinnen nach einem der Ansprüche 7 bis 9, **dadurch gekennzeichnet, dass** eine quartäre technologische Kammer (7) mit Durchgangsöffnungen für den Transport des Substrats (23) an die sekundäre Spinnkammer (6) in Richtung der Aufwickelvorrichtung (25) angrenzt, umfassend eine sekundäre Vorrichtung (11) zur Infrarotheizung, die in einem Abstand über dem Abscheidegitter (22) angeordnet ist.

11. Ein Verfahren zur kontinuierlichen Herstellung von nanofaserigen und/oder submikronen Faserstrukturen in der Vorrichtung nach einem der Ansprüche 4 bis 10, **dadurch gekennzeichnet, dass** die erste primäre oder die zweite primäre Spinnpolymerlösung zentrifugal zur Spinnkammer (3), (6) aus dem ersten Raum der Innenkammer (209) des rotierenden Spinnkopfs (20), (21) durch die erste Verlängerungskomponente (206) und die erste austauschbare Düsenanordnung (207) transportiert wird,
und aus dem zweiten Raum des Innenhohlraums (209) desselben rotierenden Spinnkopfs (20), (21) entweder die erste sekundäre oder die zweite sekundäre Spinnpolymerlösung durch die zweite Verlängerungskomponente (206) und die zweite austauschbare Düsenanordnung (207) zentrifugal in die Spinnkammer (3), (6) transportiert wird,
wobei die primäre und die sekundäre Spinnpolymerlösung nicht miteinander mischbar sind und sich entstehende Fasern aus der sekundären Spinnpolymerlösung in der Spinnkammer (3), (6) durch Verdampfen des Lösungsmittels der primären Spinnpolymerlösung abscheiden.

12. Ein Verfahren zur kontinuierlichen Herstellung von nanofaserigen und/oder submikronen Faserstrukturen in der Vorrichtung nach einem der Ansprüche 4 bis 10, **dadurch gekennzeichnet, dass** die erste primäre oder die zweite primäre Spinnpolymerlösung zentrifugal zur Spinnkammer (3), (6) aus dem ersten Raum der Innenkammer (209) des rotierenden Spinnkopfs (20), (21) durch die erste Verlängerungskomponente (206) und die erste austauschbare Düsenanordnung (207) transportiert wird, wo die Nanofasern und/oder submikronen Fasern durch zentrifugales elektrostatisches Spinnen erzeugt werden,
und aus dem zweiten Raum des Innenhohlraums (209) desselben rotierenden Spinnkopfs (20), (21) ein Vernetzungsmittel durch die zweite Verlängerungskomponente (206) und die zweite austauschbare Düsenanordnung (207) zentrifugal in die Spinnkammer (3), (6) transportiert wird, um die entstehenden Fasern aus der primären Spinnpolymerlösung chemisch zu vernetzen.

13. Ein Verfahren zur kontinuierlichen Herstellung von nanofaserigen und/oder submikronen Faserstrukturen in der Vorrichtung nach einem der Ansprüche 4 bis 10, **dadurch gekennzeichnet, dass** die erste primäre oder die zweite primäre Spinnpolymerlösung zentrifugal zur Spinnkammer (3), (6) aus dem ersten Raum der Innenkammer (209) des rotierenden Spinnkopfs (20), (21) durch die erste Verlängerungskomponente (206) und die erste austauschbare Düsenanordnung (207) mit einem Düsendurchmesser X transportiert wird,
und aus dem zweiten Raum des Innenhohlraums (209) desselben rotierenden Spinnkopfs (20), (21) entweder die erste sekundäre oder die zweite sekundäre Spinnpolymerlösung durch die zweite Verlängerungskomponente (206) und die zweite austauschbare Düsenanordnung (207) mit einem Düsendurchmesser von mehr als X zentrifugal in die Spinnkammer (3), (6) transportiert wird,
und in der Spinnkammer (3), (6) eine gemischte Schicht aus Nanofasern und/oder submikronen Fasern erzeugt wird, wobei ein Mittelwert des Faserdurchmessers aus der primären Spinnpolymerlösung kleiner ist als ein Mittelwert des Faserdurchmessers aus der sekundären Spinnpolymerlösung.

## Revendications

1. Une tête de filage destinée à la production continue de structures nanofibreuses et/ou fibreuses submicroniques, comprenant un corps (200) pourvu d'une cavité intérieure (209) dans laquelle se termine une alimentation primaire (204) en solution polymère de filage,
dans laquelle une paroi extérieure de la cavité intérieure (209) est pourvue d'au moins un trou traversant destiné au transport centrifuge de la solution polymère de filage hors de la cavité intérieure (209) vers la surface extérieure du corps (200),
dans laquelle le corps (200) est pourvu, sur sa circonférence extérieure à l'emplacement dudit au moins un trou traversant, d'un composant d'extension (206) comportant au moins un canal traversant orienté radialement qui prolonge le trou traversant ménagé dans une paroi extérieure de la cavité intérieure (209), dans laquelle le composant d'extension (209) est un objet qui s'étend à l'extérieur du corps (200) de la tête de filage et l'extrémité libre du composant d'extension (206) est adaptée pour une connexion amovible d'un réseau de buses remplaçable (207), **caractérisée en ce que**
le composant d'extension (206) est pourvu, à son extrémité libre, d'une saillie, laquelle saillie s'étend dans une encoche du réseau de buses remplaçable (207) raccordé au composant d'extension (206),
dans laquelle la surface de la saillie du composant d'extension (206) est pourvue d'une rainure sur le côté supérieur et/ou inférieur, et la surface du réseau de buses remplaçable (207) est également pourvue d'une rainure, à l'emplacement d'une encoche, sur le côté supérieur et/ou inférieur, de sorte que les rainures situées sur le côté supérieur du composant d'extension (206) et du réseau de buses remplaçable (207) raccordé et/ou sur le côté inférieur du composant d'extension (206) et du réseau de buses remplaçable (207) raccordé forment une rainure commune supérieure et/ou inférieure,
dans laquelle une pince de fixation (208), s'engageant au moins partiellement dans la rainure commune supérieure et/ou inférieure, est disposée sur le réseau de buses remplaçable (207) et sur la saillie du composant d'extension (206).

2. La tête de filage selon la revendication 1, **caractérisée en ce que** la cavité intérieure (209) est divisée en un premier espace et au moins un deuxième espace par au moins une cloison, dans laquelle l'alimentation primaire (204) en solution polymère de filage se termine dans le premier espace de la cavité intérieure (209) et l'alimentation secondaire (205) en solution polymère de filage se termine dans le deuxième espace, dans laquelle la paroi extérieure de la cavité intérieure (209) est pourvue, au niveau du premier et du deuxième espace, d'un trou traversant correspondant destiné au transport centrifuge de la solution polymère de filage hors de la cavité intérieure (209) vers la surface extérieure du corps (200) pourvu du composant d'extension (206).

3. Un appareil de filage électrostatique centrifuge comprenant une chambre de filage primaire (3), dans la partie supérieure de laquelle est disposé un arbre primaire rotatif (34) muni d'un entraînement (18), à l'extrémité inférieure libre duquel est disposée une tête de filage primaire (20), dont l'alimentation primaire (204) en solution polymère de filage est reliée, par l'intermédiaire d'un premier système de distribution primaire (30), à un dispositif (14) de dosage de la première solution polymère de filage primaire, dans lequel la chambre de filage primaire (3) est pourvue d'au moins une entrée (12) d'air conditionné,
et une grille de dépôt (22) est disposée dans la partie inférieure de la chambre de filage primaire (3), et un collecteur (26) muni d'une sortie d'air primaire (36) est disposé au-dessous de celle-ci afin de produire une pression négative sur la grille de dépôt (22), un dispositif de déroulement (24) est disposé en amont de l'entrée de la chambre de filage primaire (3) et un dispositif d'enroulement (25) est disposé en aval de la chambre de filage primaire (3) afin de transférer un substrat (23) à travers l'appareil de sorte que les trous traversants destinés au transfert du substrat (23) soient disposés sur deux parois opposées de la chambre de filage primaire (3),
dans lequel l'appareil comprend en outre une source de haute tension primaire (28) reliée à la grille de dépôt (22) afin d'assurer un dépôt uniforme des fibres sur le substrat (23), **caractérisé en ce que** la tête de filage primaire (20) est conforme à l'une quelconque des revendications 1 à 2.

4. L'appareil de filage électrostatique centrifuge selon la revendication 3, **caractérisé en ce que** la tête de filage primaire (20) dans la chambre de filage primaire (3) est conforme à la revendication 2, dans lequel l'alimentation secondaire (205) en solution polymère de filage de la tête de filage primaire (20) est reliée, par l'intermédiaire d'un premier système de distribution secondaire (31), à un dispositif (15) de dosage de la première solution polymère de filage secondaire.

5. L'appareil de filage électrostatique centrifuge selon la revendication 3 ou 4, **caractérisé en ce qu'**une chambre technologique primaire (2) munie de trous traversants destinés au transfert du substrat (23) jouxte la chambre de filage primaire (3) en direction du dispositif de déroulement (24), comprenant un dispositif d'ionisation primaire (8) disposé à une distance au-dessus de la grille de dépôt (22).

6. L'appareil de filage électrostatique centrifuge selon l'une quelconque des revendications 3 à 5, **caractérisé en ce qu'**une chambre technologique secondaire (4) munie de trous traversants destinés au transfert du substrat (23) jouxte la chambre de filage primaire (3) en direction du dispositif d'enroulement (25), comprenant un dispositif primaire (9) de chauffage infrarouge disposé à une distance au-dessus de la grille de dépôt (22).

7. L'appareil de filage électrostatique centrifuge selon l'une quelconque des revendications 3 à 6, **caractérisé en ce qu'**une chambre de filage secondaire (6) est disposée entre la chambre de filage primaire (3) et le dispositif d'enroulement (25), dans la partie supérieure de laquelle est disposé un arbre secondaire rotatif (35) muni d'un entraînement (19), à l'extrémité libre duquel est disposée une tête de filage secondaire (21) selon l'une quelconque des revendications 1 à 2, dont l'alimentation primaire (204) en solution polymère de filage est reliée, par l'intermédiaire d'un deuxième système de distribution primaire (32), à un dispositif (16) de dosage de la deuxième solution polymère de filage primaire, dans lequel la chambre de filage secondaire (6) est pourvue d'au moins une entrée (13) d'air conditionné,
et la grille de dépôt (22) est disposée dans la partie inférieure de la chambre de filage secondaire (6), et un collecteur (27) muni d'une sortie d'air secondaire (37) est disposé au-dessous de celle-ci afin de produire une pression négative sur la grille de dépôt (22),
dans lequel, dans deux parois opposées de la chambre de filage secondaire (6), sont ménagés des trous traversants destinés au transfert du substrat (23).

8. L'appareil de filage électrostatique centrifuge selon la revendication 7, **caractérisé en ce que** la tête de filage secondaire (21) dans la chambre de filage secondaire (6) est conforme à la revendication 2, dans lequel l'alimentation secondaire (205) en solution de filage de la tête de filage secondaire (21) est reliée, par l'intermédiaire du deuxième système de distribution secondaire (33), à un dispositif (17) de dosage de la deuxième solution polymère de filage secondaire.

9. L'appareil de filage électrostatique centrifuge selon la revendication 7 ou 8, **caractérisé en ce qu'**une chambre technologique tertiaire (5) munie de trous traversants destinés au transfert du substrat (23) jouxte la chambre de filage secondaire (6) en direction du dispositif de déroulement (24), comprenant un dispositif d'ionisation secondaire (10) disposé à une distance au-dessus de la grille de dépôt (22).

10. L'appareil de filage électrostatique centrifuge selon l'une quelconque des revendications 7 à 9, **caractérisé en ce qu'**une chambre technologique quaternaire (7) munie de trous traversants destinés au transfert du substrat (23) jouxte la chambre de filage secondaire (6) en direction du dispositif d'enroulement (25), comprenant un dispositif secondaire (11) de chauffage infrarouge disposé à une distance au-dessus de la grille de dépôt (22).

11. Un procédé de production continue de structures nanofibreuses et/ou fibreuses submicroniques dans l'appareil selon l'une quelconque des revendications 4 à 10, **caractérisé en ce que** la première ou la deuxième solution polymère de filage primaire est transportée par force centrifuge vers la chambre de filage (3), (6) depuis le premier espace de la chambre intérieure (209) de la tête de filage rotative (20), (21), à travers le premier composant d'extension (206) et le premier réseau de buses remplaçable (207),
et depuis le deuxième espace de la cavité intérieure (209) de la même tête de filage rotative (20), (21), soit la première soit la deuxième solution polymère de filage secondaire est transportée par force centrifuge à travers le deuxième composant d'extension (206) et le deuxième réseau de buses remplaçable (207) vers la chambre de filage (3), (6),
dans lequel les solutions polymères de filage primaire et secondaire ne sont pas miscibles entre elles et les fibres naissantes issues de la solution polymère de filage secondaire précipitent dans la chambre de filage (3), (6) par évaporation du solvant de la solution polymère de filage primaire.

12. Un procédé de production continue de structures nanofibreuses et/ou fibreuses submicroniques dans l'appareil selon l'une quelconque des revendications 4 à 10, **caractérisé en ce que** la première ou la deuxième solution polymère de filage primaire est transportée par force centrifuge vers la chambre de filage (3), (6) depuis le premier espace de la chambre intérieure (209) de la tête de filage rotative (20), (21), à travers le premier composant d'extension (206) et le premier réseau de buses remplaçable (207), où les nanofibres et/ou fibres submicroniques sont produites par filage électrostatique centrifuge,
et depuis le deuxième espace de la cavité intérieure (209) de la même tête de filage rotative (20), (21), un agent de réticulation est transporté par force centrifuge à travers le deuxième composant d'extension (206) et le deuxième réseau de buses remplaçable (207) vers la chambre de filage (3), (6) afin de réaliser la réticulation chimique des fibres naissantes issues de la solution polymère de filage primaire.

13. Un procédé de production continue de structures nanofibreuses et/ou fibreuses submicroniques dans l'appareil selon l'une quelconque des revendications 4 à 10, **caractérisé en ce que** la première ou la deuxième solution polymère de filage primaire est transportée par force centrifuge vers la chambre de filage (3), (6) depuis le premier espace de la chambre intérieure (209) de la tête de filage rotative (20), (21), à travers le premier composant d'extension (206) et le premier réseau de buses remplaçable (207) ayant un diamètre de buse X,
et depuis le deuxième espace de la cavité intérieure (209) de la même tête de filage rotative (20), (21), soit la première soit la deuxième solution polymère de filage secondaire est transportée par force centrifuge à travers le deuxième composant d'extension (206) et le deuxième réseau de buses remplaçable (207) ayant un diamètre de buse supérieur à X vers la chambre de filage (3), (6),
et une couche mixte de nanofibres et/ou de fibres submicroniques est produite dans la chambre de filage (3), (6), dans laquelle une valeur moyenne du diamètre des fibres issues de la solution polymère de filage primaire est inférieure à une valeur moyenne du diamètre des fibres issues de la solution polymère de filage secondaire.
